# EUROPÄISCHE PATENTSCHRIFT

(11) **EP 2 164 881 B1**
(45) Veröffentlichungstag und Bekanntmachung des Hinweises auf die Patenterteilung: **31.08.2011**
(21) Anmeldenummer: 08750216.7
(22) Anmeldetag: 09.05.2008
(51) Int. Cl.: C08F 222/10, C09K 3/10

(54) **VERWENDUNG EINES QUELLBAREN POLYMERS ZUM ABDICHTEN**
USE OF SWELLABLE POLYMER FOR SEALING
UTILISATION D'UN POLYMÈRE GONFLABLE POUR LE COLMATAGE

(30) Priorität: 10.07.2007 DE 102007032403
(43) Veröffentlichungstag der Anmeldung: 24.03.2010
(73) Patentinhaber: Evonik Röhm GmbH, 64293 Darmstadt (DE)
(72) Erfinder: SCHMITT, Bardo, 55252 Mainz (DE); GOMEZ, Mario, 64319 Pfungstadt (DE); EBERT, Martina, 64807 Dieburg (DE)
(86) Internationale Anmeldenummer: PCT/EP2008/055725
(87) Internationale Veröffentlichungsnummer: WO 2009/007154

(56) Entgegenhaltungen:
- JP-A- 62 022 882

## Beschreibung

Die vorliegende Erfindung betrifft die Verwendung eines quellbaren Polymers zum Abdichten.

### Stand der Technik

Quellbare Polymere und ihre Verwendung in Dichtmassen sind an sich schon bekannt. So schlägt die japanische Patentanmeldung JP 62-129376 eine Zusammensetzung vor, die für die Verhinderung von Undichtigkeiten von Abwasserkanälen ohne Freisetzung von Wasser geeignet ist. Die Zusammensetzung enthält ein (Meth)acrylat, insbesondere ein Magnesium- oder Natriumsalz, Polyethylenglykoldi(meth)acrylat, insbesondere ein wasserlösliches Polyethylenglykol(meth)acrylat, das 20-30 Gew.-% Mono(meth)acrylat-Einheiten enthalten kann, und einen Polymerisationskatalysator, insbesondere einen Redoxinitiator.

Die europäische Patentanmeldung EP 0 376 094 beschreibt ein gelbildendes Injektionsmittel zum Abdichten von Rohrleitungen oder von Bauwerken oder zur Bildung von wasserundurchlässigen Bodenschichten auf Basis von Hydroxyalkylestern der Acryl- oder Methacrylsäure und vernetzenden Monomeren. Das Mittel soll wenigsten 2 Gew.-% eines von Acryl- oder Methacrylsäure abgeleiteten tertiären Amins enthalten, das zusammen mit dem Peroxodisulfat ein Initiatorsystem bildet. Als vernetzende, mehrfach ethylenisch ungesättigte, radikalisch polymerisierbare Monomere werden insbesondere Diacrylate und Dimethacrylate von Polyethylenglykolen, die möglichst 1-10 Ethylenoxidreste enthalten sollen, sowie Methylen-bis-acrylatamid oder -methacrylamid, Acrylamidomethylether und Methacrylamidomethylether der genannten Polyethylenglykole vorgeschlagen.

Die japanische Patentanmeldung JP 02-206657 verwendet zum Abdichten von Wasserundichtigkeiten eine flüssige Mischung, die ein Monomer, z. B. Acrylamid, Polyethylenglykoldimethacrylat oder n-Methylolpropan, eines wasserabsorbierenden Polymerharzes und einen wasserdispergierenden Kautschuklatex, z. B. SBR, NBR, Naturkautschuk oder Chloroprenkautschuk, enthält. Die flüssige Mischung wird mit einem Reaktionskatalysator umgesetzt, um das gewünschte Wasserabdichtungsmaterial zu ergeben.

Die japanische Patentanmeldung JP 2003193032 A offenbart ein Wasserabdichtungsmittel auf Basis einer wässrigen Lösung, die ein wasserlösliches Polyalkylenglykoldi(meth)acrylat, ein anionisches Elektrolytmonomer, einen Alkohol mit zwei oder mehreren Hydroxylgruppen und einen Polymerisationskatalysator enthält. Dabei soll das Gewichtsverhältnis des Polyalkylenglykoldi(meth)acrylates zum anionischen Elektrolytmonomer im Bereich von 98:2 bis 40:60 sein. Der Anteil des anionischen Elektrolytmonomers beträgt 5-70 Gew.-%, bezogen auf das Gesamtgewicht der Lösung.

Die japanische Patentanmeldung JP 62-022882 A beschreibt ein wasserabdichtendes Mittel, das einen Redoxpolymerisationsinitiator, ein Polyethylenglykoldi(meth)acrylat mit 2 bis 50 Wiederholungseinheiten, ein anionisches Elektrolytmonomer und ein kationisches Elektrolytmonomer in bestimmten Mengenverhältnissen enthält.

Die internationale Patenanmeldung WO 97/03151 betrifft ein Schmiermittel, das ein polymerisierbares, flüssiges Acrylatestermonomer und einen Peroxypolymerisationsinitiator enthält. Bevorzugt werden dabei Polyethylenglykoldimethacrylate als polymerisierbare Polyacrylatester verwendet.

Die europäische Patenameldung EP 0 470 008 A1 betrifft eine Zusammensetzung auf der Basis mindestens eines wasserlöslichen oder wasserdispergierbaren Alkoxyalkylesters einer ungesättigten Carbonsäure. Die Zusammensetzung umfasst mindestens ein Polyalkoxymethoxyethylmethacrylat oder -acrylat, mindestens einen Initiator aus der Gruppe der Alkalimetallpersulfate, Ammoniumpersulfate und Wasserstoffperoxide, mindestens einen Polymerisationsbeschleuniger und Wasser. Die Zusammensetzung kann insbesondere zum unterirdischen Abdichten verwendet werden.

Die DE 1974 86 31 beschreibt allgemeine Abdichtungsmassen und erwähnt in einer Tabelle auch die Substanz Polyethylenglycolmethacrylat, das aber eine monofunktionelle Verbindung darstellt. Angaben zum Molekulargewicht der Verbindung fehlen.

Die DE 422 61 98 beschreibt wasserquellbare Dichtungsmassen aus Methacrylat-Monomeren wie z.B. ethoxyliertes TMPTMA (im Beispiel MG = 1.000, sonst keine weiteren Angaben), die Mischung enthält zusätzlich Polyethylenglykol, das nicht einpolymerisiert wird.

Die Patentanmeldung EP 1 616 906 betrifft wasserquellbare Dichtmassen aus Methacrylat-Monomeren, in den Beispielen ist nur (Meth)acrylsäure zu finden, die coextrudiert wird.

### Aufgabe und Lösung

In Anbetracht des Standes der Technik lag der vorliegenden Erfindung die Aufgabe zugrunde, Möglichkeiten zum besseren Abdichten von Undichtigkeiten aufzuzeigen. Dabei sollten die Dichtmaterialien insbesondere eine verbesserte Quellbarkeit sowie möglichst gute mechanische Eigenschaften aufweisen. Weiterhin sollte das Abdichten auf möglichst einfache Art und Weise und möglichst schnell erreicht werden können. Schließlich war es auch ein Ziel der vorliegenden Erfindung, eine möglichst effiziente und dauerhafte Abdichtung zu erreichen.

Gelöst werden diese sowie weitere nicht explizit genannte Aufgaben, die sich aus den einleitend diskutierten Zusammenhängen zwangsläufig ergeben, durch die Verwendung eines quellbaren Polymers mit allen Merkmalen des vorliegenden Patentanspruchs 1. Besonders zweckmäßige Vorgehensweisen werden in den auf Anspruch 1 rückbezogenen Unteransprüchen beschrieben. Weiterhin wird ein Verfahren zum Abdichten einer Undichtigkeit unter Schutz gestellt.

Dadurch dass man ein quellbares Polymer zum Abdichten verwendet, das durch Polymerisation einer Zusammensetzung erhältlich ist, die mindestens ein Polyalkylenglykol-di(meth)acrylat mit einem gewichtsmittlerem Molekulargewicht größer 5000 g/mol enthält, gelingt es auf nicht ohne weiteres vorhersehbare Weise, ein besseres Abdichten von Undichtigkeiten zu erreichen. Dabei zeichnet sich das Dichtmaterial insbesondere durch eine verbesserte Quellbarkeit aus und die mechanischen Eigenschaften, insbesondere die Zugfestigkeit und die Bruchdehnung, sind vergleichsweise gut. Weiterhin kann das Abdichten auf äußerst einfache Art und Weise und vergleichsweise schnell erreicht werden und es ist möglich, eine überaus effiziente und dauerhafte Abdichtung zu erreichen. Darüber hinaus ist das erfindungsgemäß eingesetzte Polymer sowohl ökologisch als auch gesundheitlich unbedenklich.

Im Rahmen der vorliegenden Erfindung wird ein quellbares Polymers zum Abdichten eingesetzt. "Quellbar" bedeut in diesem Zusammenhang, dass das Polymer unter Einwirkung eines Lösungsmittels seine Gestalt ändert und sein Volumen vergrößert. Für die Zwecke der vorliegenden Erfindung bevorzugte Lösungsmittel sind polare Verbindungen mit einer relativen Dielektrizitätskonstante größer 10, gemessen bei 25°C, insbesondere Wasser und Alkohole mit 1 bis 4 Kohlenstoffatomen, wobei Wasser ganz besonders bevorzugt wird. Zweckmäßigerweise kann eine Quellung von mindestens 150 %, insbesondere von mindestens 200% erreicht werden.

Das erfindungsgemäß einzusetzende Polymer ist durch Polymerisation einer Zusammensetzung erhältlich, die mindestens ein Polyalkylenglykol-di(meth)acrylat mit einem gewichtsmittleren Molekulargewicht größer. 5.000 g/mol, insbesondere größer 8.000 g/mol, enthält.

Die Ermittlung des Molekulargewichts kann dabei auf an sich bekannte Weise durch Gelpermeation (GPC) oder Lichtstreuung erfolgen. Besonders bewährt hat sich die Bestimmung mittels GPC.

Vorzugsweise umfasst das Polyalkylenglykoldi(meth)acrylat Ethylenglykol- und/oder Propylenglykol-Einheiten, wobei der Anteil dieser Einheiten vorzugsweise mindestens 50,0 Gew.-%, zweckmäßigerweise mindestens 75,0 Gew.-%, insbesondere mindestens 90,0 Gew.-%, jeweils bezogen auf das Gesamtgewicht des Polymers, beträgt. Polyethylenglykoldi(meth)acrylat-Einheiten werden dabei besonders bevorzugt.

Das Polymer kann ggf. weitere Comonomer-Einheiten aufweisen. Bevorzugt werden Polymere, die durch Copolymerisation mit copolymerisierbaren Aminen und/oder Hydroxyalkylestern erhältlich sind. Ganz besonders bevorzugte copolymerisierbare Amine sind tertiäre Amine der Formel (I)

CH₂ = CR' - CO - X - (R" - O)ₙ - R" - NR₂ (I)

worin R einen Alkyl-, Hydroxyalkyl- oder Alkoxyalkylrest, jeweils mit 1 bis 4 Kohlenstoffatomen im Alkylrest oder Alkoxyrest, bedeutet oder beide Reste R zusammen mit dem Stickstoffatom einen heterocyclischen Ring bilden und R' ein Wasserstoffatom oder eine Methylgruppe, X ein Sauerstoffatom oder eine Gruppe -NR- oder -NH- und R" eine Alkylengruppe mit 2 bis 4 Kohlenstoffatomen bedeuten und n eine ganze Zahl von 0 bis 4 ist.

Bei den formelmäßig dargestellten tertiären Aminen handelt es sich vorzugsweise um wasserlösliche, substituierte Ester oder Amide der Acryl- und/oder Methacrylsäure. Im Falle der Acrylsäureabkömmlinge ist R' = H; im Falle der Methacrylsäureabkömmlinge R' = CH₃. Die Amide sind wegen ihrer höheren Hydrolysebeständigkeit vor den Estern bevorzugt. Sie enthalten vorzugsweise die Gruppe X = NH. Als Gruppe R" kommen beispielsweise 1,2-Propylen-, 1,2- und 1,4-Butylen- und bevorzugt 1,2-Ethylen- und 1,3-Propylen-Gruppen in Betracht. In der Regel ist n = 0. Bei esterartigen Verbindungen obiger Formel, also mit X = O, hat n vorzugsweise einen Wert von 0 bis 4, insbesondere von 0 bis 2. Die Reste R am tertiären Amin-Stickstoffatom sind vorzugsweise Alkyl- oder Hydroxyalkylreste mit 1 bis 4 Kohlenstoffatomen, insbesondere Methylgruppen. Beide Reste R können zusammen mit dem Stickstoffatom einen vorzugsweise 5- oder 6-gliedrigen Heterocyclus bilden, z. B. einen Pyrrolidin-, Piperidin- oder Morpholin-Ring.

Besonders bevorzugte tertiäre Amine sind 2-Dimethylamino-ethyl-acrylat und - methacrylat 3-(N,N-Dimethylamino)-propyl-acrylat und -methacrylat, 4-(N,N-Dimethylamino)-butyl-acrylat und -methacrylat, 3-(N,N-Dimethylamino)-propyl-acrylamid und -methacrylamid, Triethanolamin-monoacrylat und -monomethacrylat, 2-(Dimethylaminoethyloxy)-ethyl-acrylat und -methacrylat, 2-Imidazolyl-ethyl-acrylat und -methacrylat, 2-Piperazinyl-ethyl-acrylat und -methacrylat, 2-Piperazinyl-ethyl-acrylamid und -methacrylamid, N,N-Dimethylamino-neopentyl-acrylat und -methacrylat, N,N-Dimethylamino-neopentyl-acrylamid und -methacrylamid, (1,2,2,6,6-Pentamethyl-piperidyl-4)-acrylat und -methacrylat, 3-Morpholino-propyl-acrylamid und -methacrylamid, 2-Morpholino-ethyl-acrylat und -methacrylat, 2-(N,N-Dibutylamino)-ethyl-acrylat und -methacrylat, 4-Diethylamino-1-methyl-butyl-acrylamid und -methacrylamid.

Als Hydroxyalkylester der Acryl- und/oder Methacrylsäure kommen insbesondere wasserlösliche Ester mit 2 bis 4 Kohlenstoffatomen im Hydroxyalkylrest in Betracht, wie Hydroxyethyl-acrylat und -methacrylat, 2-Hydroxypropyl-acrylat und - methacrylat, 2- oder 4-Hydroxybutyl-acrylat und -methacrylat. Auch Hydroxy-(polyalkoxy-alkyl)-ester der Struktur CH₂ = CR - CO - O - (Alk - O)ₓ - H, wobei R = H oder CH₃, Alk ein Alkylenrest mit 2 bis 4 Kohlenstoffatomen und x eine ganze Zahl von 0 bis 10 ist, sind geeignet.

Die verwendeten Monomeren weisen vorzugsweise eine derartige Wasserlöslichkeit auf, dass sie insgesamt bei 20°C eine wenigstens 10 Gew.-%ige, vorzugsweise eine 20 Gew.-%ige bis 60-Gew-%ige wässrige Lösung bilden. Da die gelösten Monomeren in manchen Fällen wechselseitig als Lösungsvermittler wirken, können auch solche Monomeren verwendet oder mitverwendet werden, die allein mit Wasser nicht vollständig mischbar sind. Besonders bevorzugt sind jedoch Monomere, die bei Temperaturen im Bereich von -5°C bis +40°C mit Wasser vollständig mischbar sind.

Erfindungsgemäß ganz besonders vorteilhaft einsetzbare Polymere sind durch Polymerisation einer Zusammensetzung erhältlich, die ein Polyethylenglykoldimethacrylat mit einem Molekulargewicht M von mindestens gleich 2.500 g/mol, besser größer 5.000 g/mol und mindestens ein weiteres (Meth)acrylatmonomer enthalten, insbesondere (Meth)acrylsäure und Amino(meth)acrylate .

Die Verwendung des Polymers zum Abdichten einer Undichtigkeit kann im Übrigen auf an sich bekannte Weise erfolgen, indem man das Polymer auf die abzudichtende Stelle aufbringt. Besonders günstig ist jedoch eine Vorgehensweise, bei welcher man eine Zusammensetzung, die mindestens ein Polyalkylenglykol-di(meth)acrylat mit einem gewichtsmittlerem Molekulargewicht größer 1.200 g/mol enthält, auf die Undichtigkeit aufbringt und polymerisiert.

Die Polymerisation erfolgt dabei vorzugsweise unter Verwendung eines radikalbildenden Initiators bei Temperaturen im Bereich von 0°C bis 100°C. Vorzugsweise wird die Zusammensetzung durch Zusatz von 1 Gew.-% bis 7 Gew.-%, bezogen auf das Gesamtgewicht der Zusammensetzung, eines wasserlöslichen anorganischen Peroxodisulfats, wie Alkali- oder Ammoniumperoxodisulfat, bei Temperaturen über 0°C, vorzugsweise bei einer Temperatur von 5°C bis 40°C in kurzer Zeit unter Bildung eines flexiblen Gels ausgehärtet. Die Härtungszeit beträgt vorzugsweise 20 Sekunden bis 120 Sekunden, besonders bevorzugt jedoch weniger als 60 Sekunden. Neben oder anstelle von Peroxodisulfat können andere wasserlösliche, radikalbildende Initiatoren, wie tert.-Butylhydroperoxid, in einer wirksamen Menge eingesetzt werden, sofern sie zusammen mit dem tertiaren Amin ein bei tiefen Temperaturen wirksames Redoxsystem bilden.

Wegen der sehr schnellen Härtung auch bei tiefer Temperatur sind besondere Vorkehrungen zweckmäßig, um die Zusammensetzung nach dem Zumischen des Initiators an den Einsatzort zu befordern, an dem es sich zu einem Gel verfestigen soll. Man verwendet günstigerweise eine Mischkammer mit geringem Rauminhalt, in die die Zusammensetzung und eine vorzugsweise wässrige Lösung des Initiators so eingeführt werden, dass sie sofort innig vermischen und danach unmittelbar an den Anwendungsort gelangen.

Die Zusammensetzung sollte möglichst mit einer Konzentration angewandt werden, bei der durch die radikalische Polymerisation unmittelbar ein Gel mit den gewünschten Eigenschaften entsteht. Geeignet ist z. B. eine Konzentration von 10 Gew.-% bis 60 Gew.-%, vorzugsweise von 20 Gew.-% bis 40 Gew.-% an polymerisierbaren Verbindungen.

Die vorliegende Erfindung wird durch die folgenden Beispiele und Vergleichsbeispiele weiter erläutert, ohne dass hierdurch eine Einschränkung des erfindungsgemäßen Gedanken erfolgen soll.

Ansatz für die Plattenpolymerisation
0,20 Gew.-% (0,12 g) 2,2'-Adsobisisobutyronitril (AIBN)
49,9 Gew.-% (29,94 g) Polyethylenglykol-Dimethacrylat
29,94 Gew.-% (17,96 g) Acrylsäure
19,96 Gew.-% (11,98 g) 2-Dimethylaminoethylmethacrylat

### Versuchsbeschreibung Polymerisation

Es wurden Plattenpolymerisate im Flachkammerverfahren in Kammern aus Glasplatten hergestellt. Als Distanzierung wurde 4 mm Rundschnur verwendet. Die Polymerisation erfolgte im Wasserbad bei 60°C über einen Zeitraum von 7 Stunden. Nach Entfernen der oberen Glasplatte und der Rundschnur erfolgte eine Temperung im Umlufttrockenschrank bei 100°C für 18 Stunden.

### Mechanischen Eigenschaften

Zur Messung der mechanischen Eigenschaften wurden die Polymerisate für drei Tage in destilliertem Wasser gelagert. Die Probekörper wurden in gequollenem Zustand aus den Polymerplatten gestanzt.

### Versuchsbeschreibung Quellung

Aus den Plattenpolymerisaten wurden Probenkörper mit den Maßen 20x15x4 mm zurecht geschnitten. Dieser wurden im Vakuumtrockenschrank bei 100°C für 18 Stunden konditioniert. Nach Abkühlen auf Raumtemperatur wurden die Probenkörper gewogen und anschließend auf Edelstahlnetzen in klaren Glasflaschen in destilliertem Wasser (100 ml) im Klimaraum bei 23°C gelagert. In regelmäßigen Abständen wurden sie entnommen, anhaftende Flüssigkeit mit einem saugfähigen Papier aufgenommen und die Polymerstücke erneut gewogen. Die Messung wurde bis zum Erreichen der maximalen Quellbarkeit fortgeführt.

**Tabelle 1: Ergebnisse**

| | Vergl.Bsp. 1 | Vergl.Bsp. 2 | Beispiel 1 | Beispiel 2 |
|---|---|---|---|---|
| Polymerisation | in wässriger Lösung | in Substanz | in Substanz | in Substanz |
| Vernetzer | PEG-1000-DMA | PEG-1000-DMA | PEG-6000-DMA | PEG-8000-DMA |
| Quellbarkeit (%) | 103 | 108 | 238 | 241 |
| Zugfestigkeit (MPa) | 0,48 | 0,47 | 0,27 | 0,28 |
| (nom.) Bruchdehnung (%) | 38 | 10,3 | 71,3 | 76,3 |

Die Ergebnisse zeigen, dass die Quellbarkeit der erfindungsgemäßen Beispiele deutlich erhöht ist. Ebenso zeigt die Prüfung zur Bruchdehnung einen deutlich verbesserten Wert. Demgegenüber ist die Zugfestigkeit zwar etwas schlechter jedoch auf vergleichbarem Niveau (IS0527-3/2/25 bei 25 mm Einspannlänge).

## Patentansprüche

1. Verwendung eines quellbaren Polymers zum Abdichten, **dadurch gekennzeichnet, dass** das Polymer durch Polymerisation einer Zusammensetzung erhältlich ist, die mindestens ein Polyalkylenglykol-di(meth)acrylat mit einem gewichtsmittlerem Molekulargewicht größer 5.000 g/mol enthält.

2. Verwendung nach Anspruch 1, **dadurch gekennzeichnet, dass** das Polyalkylenglykoldi(meth)acrylat Ethylenglykol- und/oder Propylenglykol-Einheiten umfasst.

3. Verwendung nach Anspruch 2, **dadurch gekennzeichnet, dass** ein Polyethylenglykoldi(meth)acrylat eingesetzt wird.

4. Verwendung nach mindestens einem der vorangehenden Ansprüche, **dadurch gekennzeichnet, dass** das Polymer durch Copolymerisation einer Zusammensetzung erhältlich ist, die mit Polyalkylenglykol-di(meth)acrylat copolymerisierbare Amine und/oder Hydroxyalkylester enthält.

5. Verwendung nach Anspruch 4, **dadurch gekennzeichnet, dass** das Polymer durch Copolymerisation mit mindestens einem tertiären Amin der Formel (I) erhältlich ist
CH₂=CR'-CO-X-(R"-O)ₙ-R"-NR₂ (I)
worin R einen Alkyl-, Hydroxyalkyl- oder Alkoxyalkylrest, jeweils mit 1 bis 4 Kohlenstoffatomen im Alkylrest oder Alkoxyrest, bedeutet oder beide Reste R zusammen mit dem Stickstoffatom einen heterocyclischen Ring bilden und R' ein Wasserstoffatom oder eine Methylgruppe, X ein Sauerstoffatom oder eine Gruppe -NR- oder -NH- und R" eine Alkylengruppe mit 2 bis 4 Kohlenstoffatomen bedeuten und n eine ganze Zahl von 0 bis 4 ist.

6. Verwendung nach Anspruch 4 oder 5, **dadurch gekennzeichnet, dass** das Polymer durch Copolymerisation mit mindestens einem Hydroxyalkylester der Acryl- und/oder der Methacrylsäure erhältlich ist.

7. Verfahren zum Abdichten einer Undichtigkeit, bei welchem man eine Zusammensetzung, die mindestens ein Polyalkylenglykol-di(meth)acrylat mit einem gewichtsmittlerem Molekulargewicht größer 5000 g/mol enthält, auf die Undichtigkeit aufbringt und polymerisiert.

8. Verfahren nach Anspruch 7, **dadurch gekennzeichnet, dass** man die Zusammensetzung unter Verwendung eines radikalbildenden Initiators bei Temperaturen im Bereich von 0°C bis 100°C polymerisiert.

## Claims

1. Use of a swellable polymer for sealing, **characterized in that** the polymer is obtainable by polymerizing a composition which comprises at least one polyalkylene glycol di(meth)acrylate having a weight-average molecular weight greater than 5000 g/mol.

2. Use according to Claim 1, **characterized in that** the polyalkylene glycol di(meth)acrylate comprises ethylene glycol units and/or propylene glycol units.

3. Use according to Claim 2, **characterized in that** a polyethylene glycol di(meth)acrylate is used.

4. Use according to at least one of the preceding claims, **characterized in that** the polymer is obtainable by copolymerizing a composition which comprises amines and/or hydroxyalkyl esters which are copolymerizable with polyalkylene glycol di(meth)acrylate.

5. Use according to Claim 4, **characterized in that** the polymer is obtainable by copolymerizing with at least one tertiary amine of the formula (I)
CH₂ = CR' - CO - X - (R" - O)ₙ - R" - NR₂ (I)
in which R is an alkyl, hydroxyalkyl or alkoxyalkyl radical, in each case having 1 to 4 carbon atoms in the alkyl radical or alkoxy radical, or both R radicals together with the nitrogen atom form a heterocyclic ring, and R' is a hydrogen atom or a methyl group, X is an oxygen atom or an -NR- or -NH- group and R" is an alkylene group having 2 to 4 carbon atoms and n is an integer of 0 to 4.

6. Use according to Claim 4 or 5, **characterized in that** the polymer is obtainable by copolymerizing with at least one hydroxyalkyl ester of acrylic acid and/or of methacrylic acid.

7. Method for sealing a site of defective sealing, in which a composition which comprises at least one polyalkylene glycol di(meth)acrylate having a weight-average molecular weight greater than 5000 g/mol is applied to the site of defective sealing and polymerized.

8. Method according to Claim 7, **characterized in that** the composition is polymerized using a free radical-forming initiator at temperatures in the range of 0°C to 100°C.

## Revendications

1. Utilisation d'un polymère gonflable pour l'étanchéité, **caractérisée en ce que** le polymère peut être obtenu par polymérisation d'une composition qui contient au moins un di(méth)acrylate de polyalkylène présentant un poids moléculaire pondéral moyen supérieur à 5000 g/mole.

2. Utilisation selon la revendication 1, **caractérisée en ce que** le di(méth)acrylate de polyalkylèneglycol comprend des unités d'éthylèneglycol et/ou de propylèneglycol.

3. Utilisation selon la revendication 2, **caractérisée en ce qu'**on utilise un di(méth)acrylate de polyéthylèneglycol.

4. Utilisation selon au moins l'une quelconque des revendications précédentes, **caractérisée en ce que** le polymère peut être obtenu par copolymérisation d'une composition qui contient des amines et/ou des esters d'hydroxyalkyle copolymérisables avec le di(méth)acrylate de polyalkylène.

5. Utilisation selon la revendication 4, **caractérisée en ce que** le polymère peut être obtenu par copolymérisation avec au moins une amine tertiaire de formule (I)
CH₂ = CR' - CO - X - (R" - O)ₙ - R" - NR₂ (I)
où R signifie un radical alkyle, hydroxyalkyle ou alcoxyalkyle, comprenant à chaque fois 1 à 4 atomes de carbone dans le radical alkyle ou alcoxy, ou les deux radicaux R forment ensemble avec l'atome d'azote un cycle hétérocyclique et R' signifie un atome d'hydrogène ou un groupe méthyle, X signifie un atome d'oxygène ou un groupe -NR- ou -NH- et R" signifie un groupe alkylène comprenant 2 à 4 atomes de carbone et n vaut un nombre entier de 0 à 4.

6. Utilisation selon la revendication 4 ou 5, **caractérisée en ce que** le polymère peut être obtenu par copolymérisation avec au moins un ester hydroxyalkylique de l'acide acrylique et/ou méthacrylique.

7. Procédé pour colmater une fuite, dans lequel on applique une composition qui contient au moins un di(méth)acrylate de polyalkylène présentant un poids moléculaire pondéral moyen supérieur à 5000 g/mole sur la fuite et on la polymérise.

8. Procédé selon la revendication 7, **caractérisé en ce qu'**on polymérise la composition avec utilisation d'un initiateur formant des radicaux à des températures dans la plage de 0°C à 100°C.
